Europäisches Patentamt

European Patent Office

Office européen des brevets

(11) Publication number: **0 411 552 A2**

# EUROPEAN PATENT APPLICATION

(21) Application number: **90114632.4**

(22) Date of filing: **31.07.90**

(51) Int. Cl.⁵: **G11B 5/55**

(30) Priority: **01.08.89 JP 91265/89 U**

(43) Date of publication of application:
**06.02.91 Bulletin 91/06**

(84) Designated Contracting States:
**DE FR GB**

(71) Applicant: **MITSUBISHI DENKI KABUSHIKI KAISHA**
**2-3, Marunouchi 2-chome Chiyoda-ku Tokyo(JP)**

(72) Inventor: **Matsuyama, Jiro, C/o Itami Seisakusho**
**Mitsubishi Denki K.K., 1-1,**
**Tsukaguchi-Hommachi**
**8-chome, Amagasaki-Shi, Hyogo-Ken(JP)**

(74) Representative: **Selting, Günther, Dipl.-Ing. et al**
**Deichmannhaus am Hauptbahnhof**
**D-5000 Köln 1(DE)**

(54) **A disk drive.**

(57) A disk drive with the mechanism of locking a carriage which is loaded with a head which moves on a disk, wherein both of a plunger for maintaining the state of a latch capturing a carriage extension to lock the carriage and a solenoid for attracting the plunger so as to rotate the latch in the direction of releasing the carriage are arranged in the direction perpendicular to the path of the carriage, and parallel with a pivot for rotatably supporting the latch. Accordingly, the carriage lock mechanism is of a smaller size to be readily arranged in a small disk drive.

Fig. 5

## A DISK DRIVE

### BACKGROUND OF THE INVENTION

#### Field of the Invention

The present invention relates to a disk drive with the mechanism of locking a carriage of a head.

#### Description of Related Art

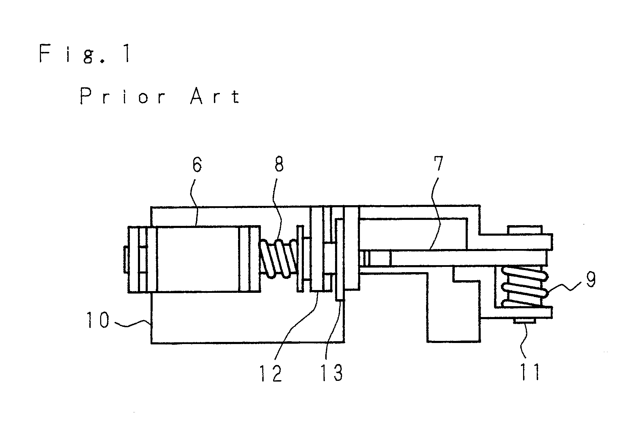

Fig. 1 through 4 illustrate construction of a conventional disk drive with the mechanism of locking a carriage which is disclosed in U.S. Patent No. 4,725,907. A carriage 3 carries and holds a head (not shown), so that when a voice coil motor drives this carriage 3, the head moves on a disk. A carriage extension 3a is protrudent on the back of the carriage 3. Below the carriage 3a is provided a latch 7, whose both ends have an upward protrusion respectively to capture the carriage extension 3a in between them. On end of the latch 7 is rotatably supported by a pivot 11 whose axis is perpendicular to the path of the carriage 3. The other end of the latch 7 has a downward protrusion recessed from said upward protrusion toward the pivot 11, providing a step 7a between said upward protrusion and downward protrusion. By this another end of the latch 7, a plunger 5 whose axis being parallel with the path of the carriage 3 is slidably supported by both a stopper and a supporting member whose lower end has a protrusion 12 protruding toward the latch 7. The plunger 5 has two different radiuses in its axial direction. Both of the supporting member and the stopper are fixed on a frame 10. A solenoid 6 is disposed in the axial direction of the plunger 5, which attracts the plunger 5 when being energized. Between the plunger 5 and the solenoid 6 is provided a compression spring 8 which normally acts in the direction of pressing one end of the plunger 5 against the latch 7. Around the pivot 11 is arranged a torsion coil spring 9 which normally gives the latch 7 a torque in the direction of releasing the carriage extension 3a from the latch 7. A brake plate 13 is slidably supported in between aforesaid supporting member and stopper.

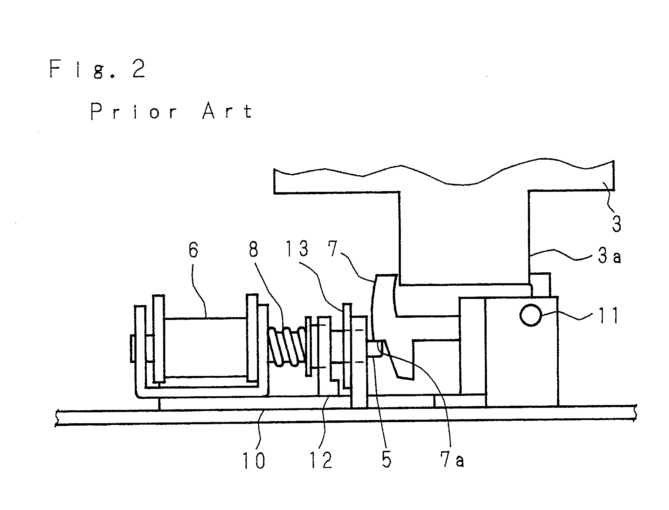

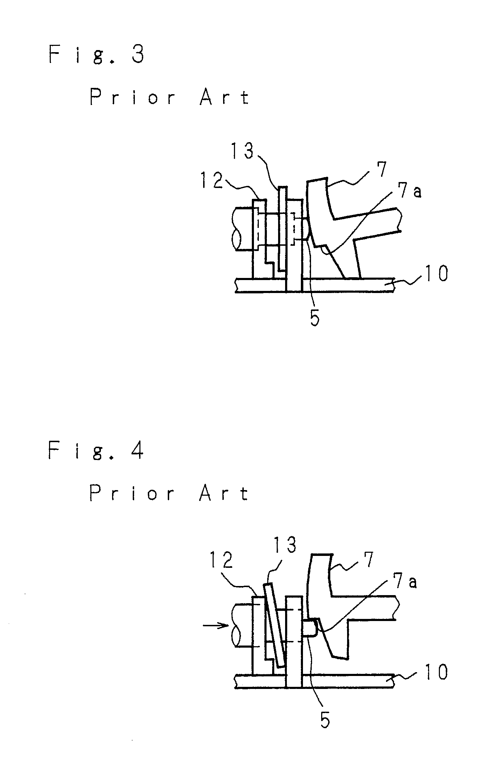

Now will be described below an operation of the conventional carriage lock mechanism. In the state that the carriage is unlocked as shown in Fig. 3, the latch 7 is pressed against the frame 10 by the counterclockwise torque which was given by the torsion coil spring 9. The plunger 5 is pressed against the latch 7 by the force of the compression spring 8, and this state is maintained. When the carriage extension 3a presses the protrusion of the latch 7 toward the right in Fig. 3, the latch 7 rotates clockwise fulcruming the pivot 11. The front end of the plunger 5 is entrapped at the step 7a of the latch 7, which prevents the latch 7 from rotating counterclockwise. As a result, movement of the carriage 3 is constrained as shown in Fig 2. In such a state as shown in Fig. 2, when the solenoid 6 is energized to attract the plunger 5 and the plunger 5 moves to the left, the latch 7 is rotated counterclockwise by the counterclockwise torque applied by the torsion coil spring 8, that is, rotated downward in Fig. 2. And the constrained carriage extension 3a is released, as a result, the carriage 3 is unlocked.

While, in the state that the carriage 3 is constrained as shown in Fig. 4, any shock is applied from the side of the solenoid 6 in the pressing direction of the plunger 5, the brake plate 13 is slanted by its inertia. And this slanted brake plate 13 generates friction between the brake plate 13 and the plunger 5 to constrain the movement of plunger 5, as a result, the carriage 3 is locked.

As can be seen from the above description, the components of the carriage lock mechanism of the conventional disk drive are arranged in line, the arrangeable place of this carriage lock mechanism is limited, and specifically it is difficult to arrange this mechanism in a small disk drive of less than 3.5 inch disk.

### SUMMARY OF THE INVENTION

The foregoing disadvantage is overcome in accordance with the present invention.

The primary object of the present invention is to provide a disk drive whose carriage lock mechanism is of a smaller size and is able to be arranged in any place by arranging a plunger in such a way that its axis is to be perpendicular to the path of a carriage and parallel with the axis of a pivot of a latch.

The above and further objects and features of the invention will more fully be apparent from the following detailed description with accompanying drawings.

### BRIEF DESCRIPTION OF THE DRAWINGS

Fig. 1 is a plan view illustrating construction of the carriage lock mechanism of a conventional disk drive,

Fig. 2 is a side view thereof,

Fig. 3 and Fig. 4 are fragmentary side views illustrating the states that the carriage lock mechanism is unlocked and that any shock is applied thereto, respectively,

Fig. 5 is a plan view illustrating construction of the carriage lock mechanism of a disk drive of the present invention,

Fig. 6 and Fig. 7 are a plan view and a left side view illustrating the unlocked state of the carriage lock mechanism of the disk drive of the present invention, and

Fig. 8, Fig. 9 and Fig. 10 are a plan view, a left side view, and a front view illustrating the locked state of the carriage lock mechanism of the disk drive of the present invention.

## DESCRIPTION OF THE PREFERRED EMBODIMENTS

Now will be described below a disk drive of the present invention with reference to the accompanying drawings.

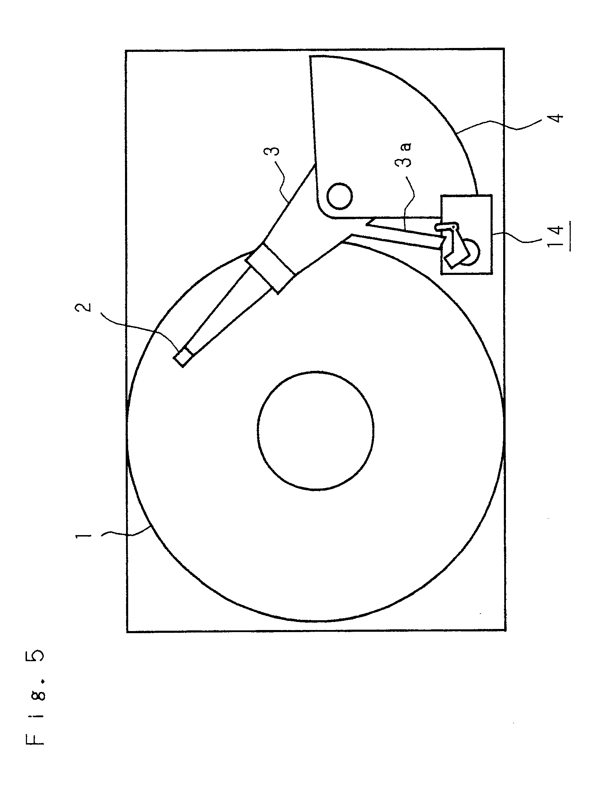

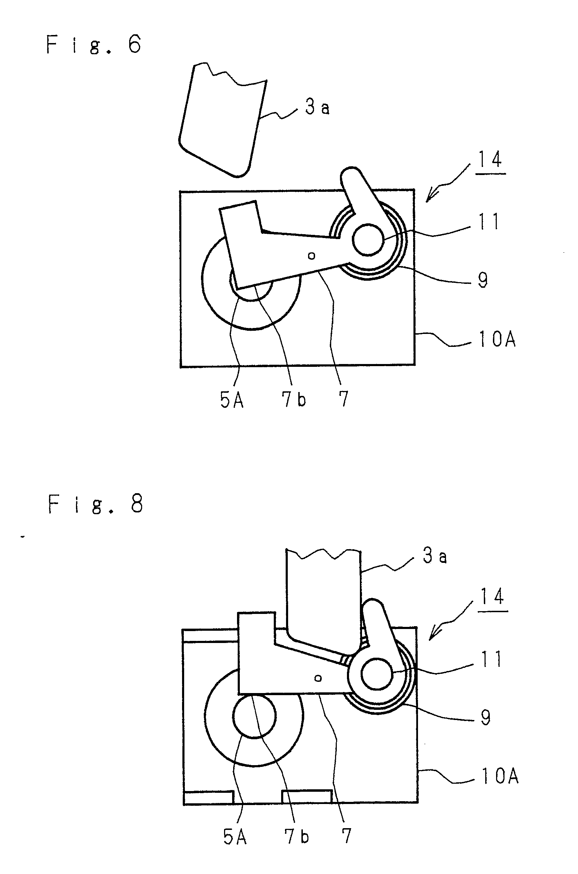

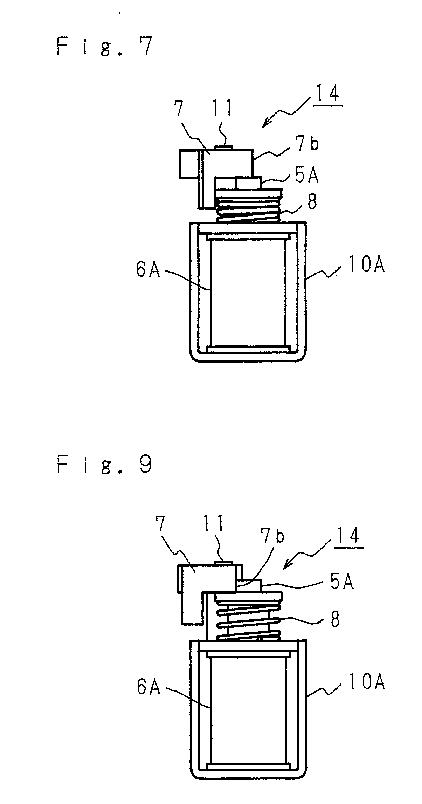

Fig. 5 is a plan view illustrating construction of a magnetic disk drive in accordance with the present invention which is loaded with the carriage lock mechanism, and Figs. 6 through 10 are plan views and side views illustrating construction of the carriage lock mechanism.

A carriage 3 carries and holds a magnetic head 2, so that when a voice coil motor 4 drives this carriage 3, the magnetic head 2 moves on a disk 1. At the side of the carriage 3 is provided a lock mechanism 14 for locking the carriage 3. The carriage 3 has at its one side a carriage extension 3a protruding toward the lock mechanism 14. In the vicinity of the tip of the carriage extension 3a is provided a latch 7 with a protrusion at its both ends protruding toward the carriage extension 3a, and this carriage extension 3a is captured in between these two protrusions. One end of the latch 7 is rotatably supported by a pivot 11 whose axis is rectangular to the path of the carriage 3. Beneath the protrusion it the other end of the latch 7 is provided a downward protrusion which abuts against a stopper portion provided at the upper end of a compression spring 8, which will be described later, to restrain the rotation of the latch 7.

At the side of the other end of the latch 7 is arranged a plunger 5A slidably supported whose axis is perpendicular to the path of the carriage 3. Beneath the plunger 5A is arranged a solenoid 6A, which attracts the plunger 5A by being energized. Between the plunger 5A and the solenoid 6A is provided the compression spring 8 which normally presses one end of the plunger 5A against the latch 7. Around the pivot 11 is provided a torsion coil spring 9 for normally giving the latch 7 a counterclockwise torque, that is, in the direction of releasing the carriage extension 3a from the latch 7.

Both of the solenoid 6A and the pivot 11 are fixed to a frame 10A.

Now will be described below an operation of the carriage lock mechanism in accordance with the present invention. In the state that the carriage is unlocked as shown in Fig. 6, the latch 7 is pressed against the stopper portion at the upper end of the compression spring 8 by the counterclockwise torque applied by the torsion coil spring 9. The upper end of the plunger 5A is pressed against the latch 7 by the compression spring 8 to lift the latch 7, which state is maintained.

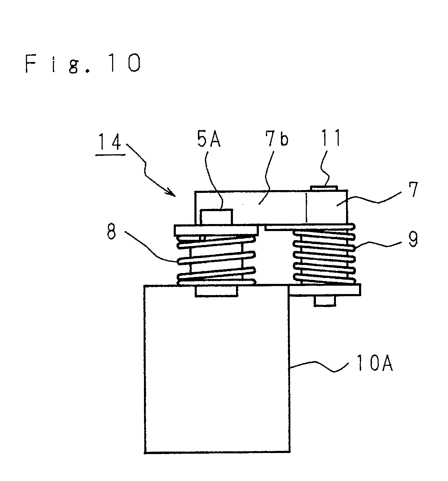

When the carriage extension 3a presses the protrusion of latch 7 at the side of the pivot 11, the latch 7 rotates clockwise fulcruming the pivot 11. The tip of the plunger 5A is lifted up to a side surface 7b of the latch 7 to prevent the latch 7 from rotating counterclockwise. As a result, the movement of the carriage 3 is constrained as shown in Figs. 8 and 9. In the state shown in Figs. 8 and 9, when the solenoid 6A is energized to attract plunger 5A and the plunger 5A moves downward, the latch 7 is rotated counterclockwise by the counterclockwise torque which was given by the torsion coil spring 9, that is, rotated downward in Fig. 8. And the constrained state of the carriage extension 3a is released, as a result, the carriage 3 is unlocked.

It is not intended that the unit for loading the carriage lock mechanism be limited to the magnetic disk drive which was mentioned above in this embodiment. Other suitable units may be employed.

In addition, it is not limited that the place to provide the carriage lock mechanism be limited to the side of the carriage which was mentioned above in this embodiment. The carriage lock mechanism in accordance with the present invention is of a smaller size, then, it may be disposed in other suitable places, such as a position under the car riage.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within the metes and bounds of the claims, or equivalence of such metes and bounds thereof are therefore intended to be embraced by the claims.

## Claims

1. A disk drive comprising:
a head for transferring information to/from a disk,
a carriage for supporting said head to position it on the disk,
an actuator for shifting said carriage in a specified direction, and
locking means for locking said carriage at a fixed position, including a solenoid and plunger extending in a direction perpendicular to said specified direction, a pivot with an axis parallel to said solenoid and plunger, and a latch supported rotatably around said pivot,
whereby said latch is capable of capturing said carriage and said plunger is biased against said latch to keep said latch capturing said carriage.

2. A disk drive as set forth in Claim 1, wherein said latch has a protrusion in the path of said carriage which causes said latch to rotate in the direction of capturing said carriage responsive to being struck by said carriage.

3. A disk drive as set forth in Claim 2, wherein a spring is mounted coaxially with said pivot for rotating said latch in the direction of releasing said carriage.

4. A disk drive as set forth in Claim 1, wherein said locking means is disposed at the side of said carriage.

Fig. 1

Prior Art

Fig. 2
Prior Art

Fig. 3

Prior Art

Fig. 4

Prior Art

Fig. 5

Fig. 6

Fig. 8

Fig. 7

Fig. 9

Fig. 10